# EUROPÄISCHE PATENTSCHRIFT

(11) **EP 1 558 421 B1**
(45) Veröffentlichungstag und Bekanntmachung des Hinweises auf die Patenterteilung: **11.06.2008**
(21) Anmeldenummer: 03815802.8
(22) Anmeldetag: 08.10.2003
(51) Int. Cl.: B23K 9/32, B01D 29/00, B23K 26/16, B01D 39/06, B01D 46/30, B23K 37/00

(54) **VORRICHTUNG ZUM ENTFERNEN VON FUNKEN AUS EINEM GASSTROM**
DEVICE FOR REMOVING SPARKS FROM A GASEOUS STREAM
DISPOSITIF POUR ELIMINER DES ETINCELLES D'UN COURANT DE GAZ

(30) Priorität: 08.10.2002 DE 20215433 U
(43) Veröffentlichungstag der Anmeldung: 03.08.2005
(73) Patentinhaber: DONALDSON COMPANY, INC., Minneapolis, MN 55440-1299 (US)
(72) Erfinder: SCHLEBES, Rolf, 46499 Hamminkeln (DE); KIY, Andreas, 45891 Gelsenkirchen (DE)
(74) Vertreter: Eisenführ, Speiser & Partner
(86) Internationale Anmeldenummer: PCT/IB2003/006510
(87) Internationale Veröffentlichungsnummer: WO 2004/079165

(56) Entgegenhaltungen:
- DE-A- 3 304 344
- DE-A- 3 404 483
- DE-C- 515 188
- GB-A- 977 878
- GB-A- 1 520 252
- PATENT ABSTRACTS OF JAPAN Bd. 013, Nr. 326 (C-620), 24. Juli 1989 (1989-07-24) & JP 1 104322 A (MITSUBISHI HEAVY IND LTD), 21. April 1989 (1989-04-21)
- PATENT ABSTRACTS OF JAPAN Bd. 199, Nr. 202, 29. Februar 1996 (1996-02-29) & JP 7 266053 A (KOBE STEEL LTD), 17. Oktober 1995 (1995-10-17)
- PATENT ABSTRACTS OF JAPAN Bd. 0111, Nr. 76 (C-426), 5. Juni 1987 (1987-06-05) & JP 62 001433 A (HITACHI LTD), 7. Januar 1987 (1987-01-07)
- PATENT ABSTRACTS OF JAPAN Bd. 199, Nr. 711, 28. November 1997 (1997-11-28) & JP 9 174276 A (AMADA CO LTD), 8. Juli 1997 (1997-07-08)

## Beschreibung

Die Erfindung betrifft eine Vorrichtung zum Entfernen von Funken oder aus einem Gasstrom mit einem Gehäuse Einlass und einen Auslass für den Gasstrom aufweist und Mittel zum gemäß dem Oberbegriff des Anspruchs 1 (siehe, z.B., GB 1 520 252).

Derartige Vorrichtungen sind bekannt und werden im Zusammenhang mit Luftaufbereitungsanlagen in industriellen Umgebungen eingesetzt, um beispielsweise beim Schleifen von Metallen oder Schweißen entstehende Staub- und andere Partikel mit hoher Wärmeenergie, insbesondere also Funken, in ihrem Energiegehalt abzusenken und dabei die Funken zu löschen.

Die beispielsweise durch Schleifen oder Schweißen in der genannten Weise belasteten Luft wird bei industriellen Anwendungen regelmäßig abgesaugt und einer Luftaufbereitungsanlage mit entsprechenden Filtern zugeführt. Diese Filter beinhalten regelmäßig unter Verwendung von Naturfasern oder Kunststoffen hergestellte Filterelemente, -taschen, - schläuche oder - patronen, bei denen das Filtermaterial durch Kunststoff fixiert werden kann. Durch Einsatz der einleitend angesprochenen Vorrichtungen als Vorabscheider für die Luftreinigungsfilter soll vermieden werden, dass Staubpartikel mit hohem Energieinhalt Löcher in das Filtermaterial brennen oder dieses gar in Brand setzen.

Bisher hat man für derartige Zwecke Vorrichtungen mit Prallplatten oder Zyklone eingesetzt, die von dem abgesaugten Gasstrom durchsetzt wurden. Sie haben ihren Zweck mehr oder weniger zufriedenstellend, aber doch nicht immer mit der in vielen Fällen notwendigen Sicherheit erfüllt und waren kostenaufwendig.

Der Erfindung lag deshalb die Aufgabe zugrunde, eine Vorrichtung der Eingangs genannten Art vorzuschlagen, die beim Energieentzug, insbesondere also bei der Funkenlöschung, bessere Ergebnisse als der Stand der Technik erzielt.

Die Erfindung ist gemäß einen Vorrichtung nach Anspruch 1.

Auf diese Weise wird die gestellte Aufgabe gelöst.

Bei der genannten Lösung wird bevorzugt, dass das Material innerhalb des Gehäuses zwischen zwei beabstandeten, durchbrochenen Trennwänden gefangen ist. Vorteilhaft hierbei ist, wenn der Raum zwischen den Trennwänden Vorrichtung nach Anspruch 2 dadurch gekennzeichnet ist, dass der Raum mindestens eine der Befüllung und Entleerung dienende verschließbare Öffnung aufweist.

Um die Schüttung nach einer längeren Betriebszeit auswechseln zu können kann vorgesehen sein, dass je eine Befüll- und eine Entleerungsöffnung in dem Gehäuse vorgesehen ist, die den genannten Raum zwischen den Trennwänden bei Bedarf mit der Umgebung verbindet.

Für den praktischen Betrieb ist es zweckmäßig, dass das Gehäuse mindestens einen, vorzugsweise zwei Einlässe für die Zufuhr von Druckluft zu Reinigungszwecken in das Gehäuseinnere und darüber hinaus mindestens einen, vorzugsweise mehrere Wassereinlässe aufweist, um in Ausnahmefällen Wasser oder ein anderes Kühlmittel zur Temperaturabsenkung oder gar zur Feuer- oder Funkenlöschung in das Gehäuse einsprühen zu können. Diese Einlässe münden in Strömungsrichtung vor oder hinter dem Raum zwischen den Trennwänden in das Innere des Gehäuses ein.

Das für die Schüttung benutzte Material hat eine mikroporöse Oberfläche und besteht besonders bevorzugt aus Blähton. Dieses Material hat unter anderem den Vorteil, dass es stark hygroskopisch ist. Diese Eigenschaft verhindert eine unerwünschte Befeuchtung des Filtermaterials im nachgeschalteten Hauptfilter, wenn zur Energieabsenkung oder zur Feuerlöschung Wasser durch die erwähnten Düsen eingesprüht wird.

Versuche mit der erfindungsgemäßen Vorrichtung haben gezeigt, dass gute Ergebnisse mit einem Material einer Körnung von etwa 5 bis 15 mm erreichbar sind. Gemäß der Erfindung sollte die Dicke der Schütte in Strömungsrichtung so festgelegt wird, daß die Kontaktzeit des Gases mit dem Material von 0,1 bis 2 Sekunden beträgt. Nach den bisherigen Erfahrungen reicht die so ermittelte Dicke aus, um die gestellte Aufgabe zu lösen, ohne dass der Druckabfall zwischen dem Ein- und dem Auslass der Vorrichtung ein unerwünschtes Maß annimmt.

Bei Verwendung von Blähton kann die erfindungsgemäße Vorrichtung mit großem Vorteil auch zur Entfeuchtung von Abluft oder Abgase benutzt werden, beispielsweise in der Anlaufphase verschiedener Prozesse.

Die Erfindung ist nachstehend anhand der in den Zeichnungen dargestellten beiden Ausführungsbeispiele näher erläutert. In den Zeichnungen zeigen:
- Figur 1: eine Seitenansicht der erfindungsgemäßen Vorrichtung;
- Figur 2: eine Stirnansicht auf die in Figur 1 linke Seite der Vorrichtung;
- Figur 3: einen Längsschnitt durch die Vorrichtung gemäß Figur 1;
- Figur 4: eine Draufsicht auf die Oberseite der Vorrichtung gemäß Figur 1;
- Figur 5: eine Ansicht einer konstruktiven Variante der Erfindung als eine an ein Hauptfilter direkt angesetzte Vorrichtung;
- Figur 6: eine Draufsicht auf die Vorrichtung der Figur 5;
- Figur 7: eine Seitenansicht der Vorrichtung der Figur 5 und
- Figur 8: eine Rückansicht der Vorrichtung.

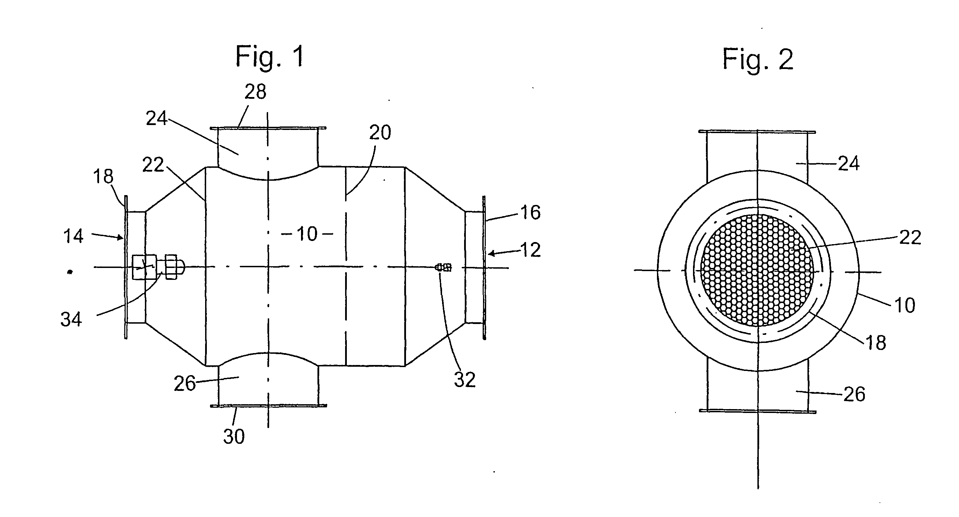

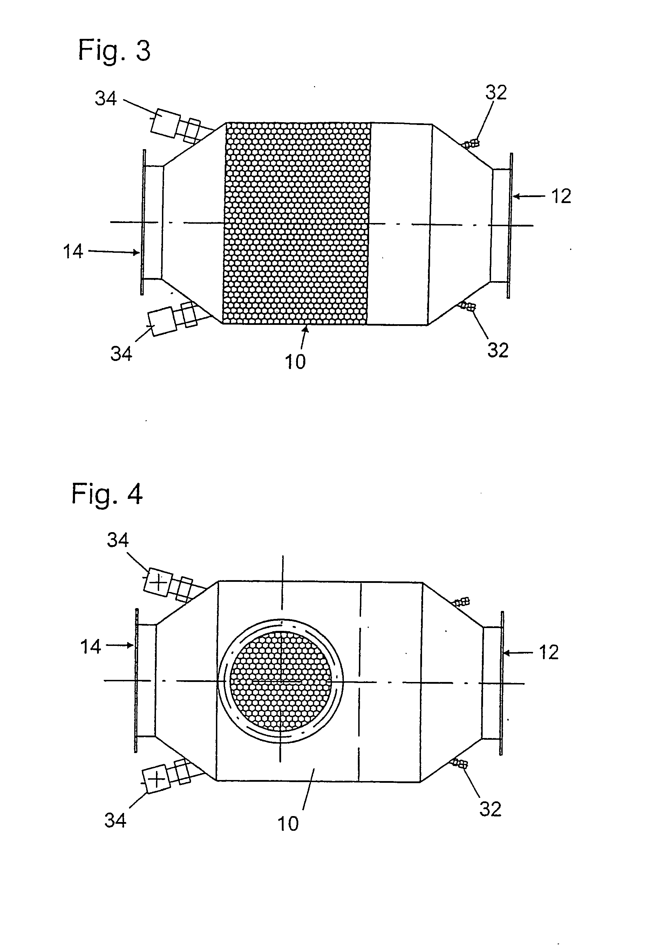

Die erste Ausführungsform der Erfindung gemäß den Figuren 1 bis 4 weist ein im Grundsatz zylindrisches Gehäuse 10 auf, welches einen Einlass 12 sowie einen Auslass 14 hat. Ein- und Auslass sind mit Flanschen 16, 18 versehen, mit deren Hilfe das Gehäuse 10 in eine nicht dargestellte Rohrleitung eingefügt werden kann, durch die hindurch ein verunreinigtes Gas, üblicherweise verunreinigte und funkentragende Luft zu einem nicht dargestellten Hauptfilter strömt. Angrenzend an den Einlass 12 erweitert sich das Gehäuse, hat in Strömungsrichtung darauffolgend einen zylindrischen Abschnitt, eine sich anschließend wieder kegelförmig verjüngende Form und geht dann in den Auslass 14 über.

Innerhalb des Gehäuses 10 sind zwei beabstandete und den Innenraum des Gehäuses in seinem zylindrischen Teil abgrenzende und etwa unter 90 Grad zur Strömungsrichtung verlaufende Lochbleche als Trennwände 20, 22 eingebaut und mit dem Gehäuse fest verbunden. Die beiden Trennwände 20, 22 begrenzen einen zylindrischen Hohlraum innerhalb des Gehäuses 10. Die in Strömungsrichtung gemessene Länge dieses Hohlraums kann je nach Anwendungsfall unterschiedlich sein, wie weiter unten noch angesprochen wird.

Das Gehäuse 10 weist weiterhin zwei sich gegenüberliegende Stutzen 24, 26 auf, die im Bereich ihrer freien Ende jeweils eine Öffnung haben und mit Deckeln 28, 30 verschließbar sind. Durch einen dieser Stutzen wird der von den Trennwänden 20, 22 begrenzte Raum im Gehäuse 10 mit einer Schüttung aus einem keramischen oder mineralischen Material gefüllt. Der andere Stutzen dient dem Zweck, den genannten Raum innerhalb des Gehäuses 10 bei Bedarf zu entleeren.

Angrenzend an den Einlass 12 des Gehäuses 10 ist dieses mit einem oder mehreren Drucklufteinlässen 32 ausgerüstet, durch die hindurch Druckluft zu Reinigungszwecken in das Innere des Gehäuses 10 einblasbar ist, um die Standzeit der Vorrichtung zu verlängern.

An dem dem Auslass 14 des Gehäuses 10 zugewandten Ende des Gehäuses ist dieses mit einem oder mehreren Einsprühdüsen für ein Kühlmedium, insbesondere Wasser, versehen. Durch das Einsprühen des Wassers in das Gehäuse können die Temperaturen des Gasstroms abgesenkt bzw. noch unerwartet auftretende Brände gelöscht werden.

Die Vorrichtung gemäß den Figuren 1 bis 4 kann in beliebiger Lage, insbesondere also vertikal oder horizontal in bestehende Abluft- bzw. Abgasleitungen eingebaut werden. Es versteht sich, dass das Gehäuse 10 mit einem oder mehreren derartigen Gehäusen kaskadiert, d. h. also in Reihe liegend oder stehend in eine Abgasleitung eingebaut werden kann.

Das für die Schüttung verwendete Material ist ein Granulat und liegt in mikroporöser Form vor. Besonders geeignet für die Zwecke der Erfindung ist Blähton als ein hoch wärmefestes, gebranntes, mikroporöses Material. In bestimmten Anwendungsfällen ist auch Kies verwendbar. Beide Arten von Materialien, d. h. also ein keramisches oder mineralisches Material in Form eines vorzugsweise mikroporösen Granulates führten dazu, dass das durch den Einlass 12 zuströmende Gas über eine Verweilzeit von 0,1 und 2 Sekunden vielfältig durch das Material im Bereich zwischen den beiden Lochblechen umgelenkt wird, wodurch es soviel Energie abbaut, wie es für den hier interessierenden Zweck benötigt wird, und wodurch die Funken im Gasstrom verlöschen.

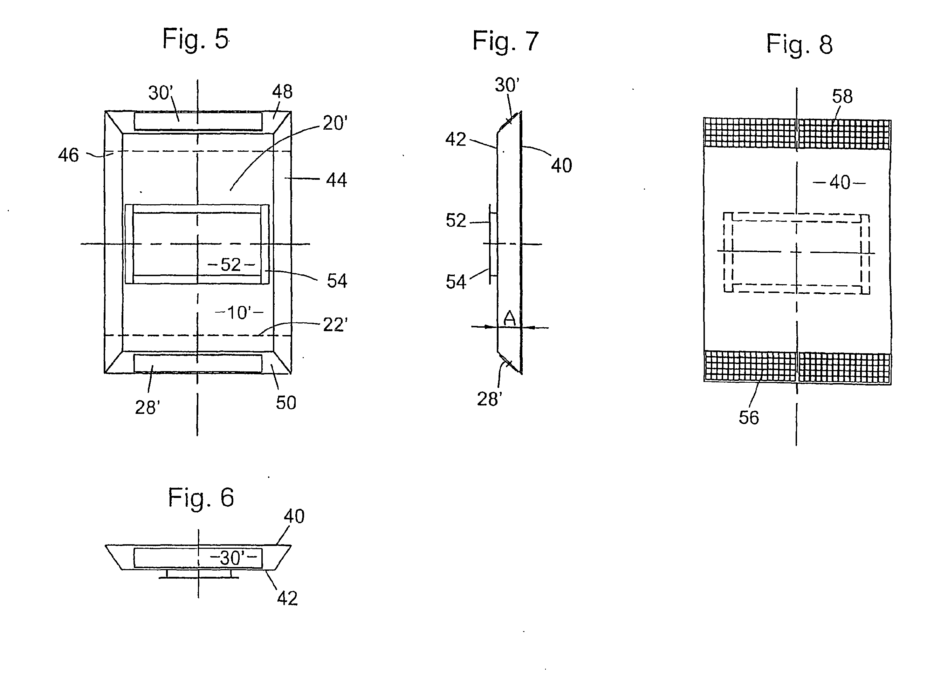

Ein weiteres Ausführungsbeispiel ist in den Figuren 5 bis 8 gezeigt, auf die nachstehend kurz eingegangen werden soll.

Die hier gezeigte abweichende Form eines Vorabscheiders gemäß der Erfindung hat eine Form, die es erlaubt, diesen Vorfilter unmittelbar an einen Hauptfilter anzuflanschen.

Der Vorfilter aus dieser zweiten Ausführungsform besitzt eine ebene Rückwand 40, die dem Anschluss an den nicht dargestellten Hauptfilter dient. Im Abstand A (Figur 7) von dieser Rückwand 40 befindet sich eine parallel dazu verlaufenden Frontwand 42 von etwas kleinerem Umriss. Geneigt angeordnete Seitenwände 44, 46, 48, 50 verbinden die Rück- mit der Frontwand zu einem Gehäuse 10'.

Die sich gegenüberliegenden Seitenwände 44 und 46 weisen Öffnungen analog den Stutzen 24, 26 auf, die mit Hilfe von Deckeln 28', 30' verschließbar sind und der Einfüllung des Schüttgutes bzw. dessen Entfernung dienen.

Die Frontwand 42 weist eine im Ausführungsbeispiel rechteckige Eintrittsöffnung 52 auf, die durch einen Flansch 54 begrenzt ist und durch die das zuströmende Gas in das Gehäuse 10' gelangt. Die dazu benötigte Rohrleitung ist in der Zeichnung nicht dargestellt.

Innerhalb des Gehäuses 10' befinden sich zunächst zwei durch gestrichelte Linien angedeutete Trennwände 20', 22' in Form von Lochblechen, die die Rückwand 40 mit der Frontwand 42 zwischen den Seitenwänden 44, 46 verbinden und auf diese Weise durch den oberen bzw. unteren Deckel 28', 30' zugängliche Taschen für das keramische oder mineralische Material bilden.

Aus Figur 8, die die Rückseite der Vorrichtung dieses Ausführungsbeispiels zeigt, sind zwei weitere Lochbleche 56, 58 erkennbar, die jeweils eine rechteckige Öffnung am (in der Zeichnung gesehen) oberen bzw. unteren Ende der Rückwand 40 in gasdurchlässiger Weise verschließen und dadurch das Zurückhalten des keramischen bzw. mineralischen Materials innerhalb des Gehäuses 10 bewirken.

Das durch Öffnung 52 zuströmende Gas trifft innerhalb des Gehäuses 10 zunächst auf die Rückwand 40, wird dort um 90 Grad nach oben bzw. unten umgelenkt, durchströmt dann die aus Lochblech bestehende Trennwand 20' bzw. 22', wird in dem dort befindlichen Granulat vielfach umgelenkt und verlässt das Gehäuse 10 dann durch die Lochbleche 56, 58, von wo das Gas unmittelbar und ohne zwischengeschaltete Rohrleitungen in den Hauptfilter einströmt.

## Patentansprüche

1. Vorrichtung zum Entfernen von Funken aus einem Gasstrom mit einem Gehäuse (10), das einen Einlass (12) und einen Auslass (14) für den Gasstrom aufweist und Mittel zum Entfernen der Funken umschließt,
**dadurch gekennzeichnet, daß** in dem Gehäuse eine Schüttung aus einem keramischen oder mineralischen Material angeordnet ist, die einen dem Einlass zugekehrten Eingangsbereich (20) und einen dem Auslass zugekehrten Ausgangsbereich (22) aufweist und in dem Gehäuse derart angeordnet ist, dass der gesamte Gasstrom durch die Schüttung zwangsgeführt wird;
und dass der von dem Gasstrom in der Schüttung durchströmte Weg in Abhängigkeit von der Art und Korngröße des Materials so bestimmt wird, dass der Gasstrom hinter dem Ausgangsbereich im wesentlichen frei von Funken ist,
wobei die Dicke der Schüttung in Strömungsrichtung so festgelegt wird, dass die Kontaktzeit des Gases mit dem Material 0,1 bis 2 Sekunden beträgt.

2. Vorrichtung nach Anspruch 1.,
**dadurch gekennzeichnet, dass** das Material innerhalb des Gehäuses zwischen 2 beabstandeten, durchbrochenen Trennwänden (20, 22) gefangen ist.

3. Vorrichtung nach Anspruch 2,
**dadurch gekennzeichnet, dass** der Raum zwischen den Trennwänden (20, 22) mindestens eine der Befüllung und Entleerung dienende verschließbare Öffnung (Stutzen 24, 26) aufweist.

4. Vorrichtung nach Anspruch 3,
**dadurch gekennzeichnet, dass** je eine verschließbare Befüll- und eine Entleerungsöffnung vorgesehen ist.

5. Vorrichtung nach mindestens einem der Ansprüche 1 - 4,
**dadurch gekennzeichnet, dass** das Gehäuse mindestens einen Einlass (32) für Druckluft zu Reinigungszwecken aufweist.

6. Vorrichtung nach mindestens einem der Ansprüche 1 - 5,
**dadurch gekennzeichnet, dass** das Gehäuse mindestens einen Wassereinlass (34) aufweist.

7. Vorrichtung nach Anspruch 5 und/oder 6,
**dadurch gekennzeichnet, dass** die Einlässe in Strömungsrichtung vor oder hinter den Raum zwischen den Trennwänden in das Gehäuse (10) münden.

8. Vorrichtung nach mindestens einem der Ansprüche 1 - 7,
**dadurch gekennzeichnet, dass** das Material eine mikroporöse Oberfläche hat.

9. Vorrichtung nach mindestens einem der Ansprüche 1-8,
**dadurch gekennzeichnet, dass** das Material Blähton ist.

10. Vorrichtung nach mindestens einem der Ansprüche 1 - 7,
**dadurch gekennzeichnet, dass** das Material Kies ist.

11. Vorrichtung nach mindestens einem der Ansprüche 1 - 10,
**dadurch gekennzeichnet, dass** das Material eine Körnung etwa 5 - 15 mm hat.

## Claims

1. Device for removing sparks from a flow of gas, said device having a casing (10) which has an inlet (12) and an outlet (14) for the flow of gas and encloses means for removing the sparks,
**characterised in that** there is disposed, in the casing, a filling which consists of a ceramic or mineral material, has an entry region (20) that faces towards the inlet and an exit region (22) that faces towards the outlet, and is disposed in the casing in such a way that the entire flow of gas is compulsorily guided through said filling;
and that the path along which the flow of gas flows through the filling is determined in dependence upon the nature and grain size of the material in such a way that, downstream of the exit region, said flow of gas is essentially free from sparks, the thickness of the filling in the direction of flow being fixed in such a way that the time for which the gas is in contact with the material is 0.1 to 2 seconds.

2. Device according to claim 1,
**characterised in that** the material is trapped within the casing between two spaced-apart, perforated partitions (20, 22).

3. Device according to claim 2,
**characterised in that** the space between the partitions (20, 22) has at least one occludable aperture (connecting pieces 24, 26) which serve for filling and emptying purposes.

4. Device according to claim 3,
**characterised in that** an occludable filling aperture and an occludable emptying aperture is provided in each case.

5. Device according to at least one of claims 1 to 4,
**characterised in that** the casing has at least one inlet (32) for compressed air for cleaning purposes.

6. Device according to at least one of claims 1 to 5,
**characterised in that** the casing has at least one water inlet (34).

7. Device according to claim 5 and/or claim 6,
**characterised in that**, in the direction of flow, the inlets open into the casing (10) upstream or downstream of the space between the partitions.

8. Device according to at least one of claims 1 to 7,
**characterised in that** the material has a microporous surface.

9. Device according to at least one of claims 1 to 8,
**characterised in that** the material is bloating clay.

10. Device according to at least one of claims 1 to 7,
**characterised in that that** the material is gravel.

11. Device according to at least one of claims 1 to 10,
**characterised in that** the material has a granulation of about 5 to 15 mm.

## Revendications

1. Dispositif destiné à éliminer des étincelles hors d'un flux de gaz, comportant un carter (10) qui est muni d'une entrée (12) et d'une sortie (14) pour le flux de gaz et entoure des moyens destinés à éliminer les étincelles,
**caractérisé en ce que** dans le carter est disposé un remblai formé par des matériaux céramiques ou minéraux, lequel comporte une zone d'amission (20) orientée vers l'entrée, et une zone d'évacuation (22) orientée vers la sortie, et lequel est disposé dans le carter de telle sorte que la totalité du flux de gaz traverse le remblai par guidage forcé,
et **en ce que** le trajet parcouru par le flux de gaz dans le remblai est déterminé en fonction de la nature et de la granulométrie du matériau, de telle sorte que le flux de gaz ne contient sensiblement plus d'étincelles en aval de la zone d'évacuation, l'épaisseur du remblai dans la direction d'écoulement étant définie de telle sorte que le temps du contact du gaz avec le matériau est de l'ordre de 0,1 à 2 secondes.

2. Dispositif selon la revendication 1,
**caractérisé en ce que** le matériau est maintenu à l'intérieur du carter entre deux cloisons (20, 22) transpercées, situées à distance l'une de l'autre.

3. dispositif d'entraînement selon la revendication 2,
**caractérisé en ce que** l'espace entre les deux cloisons (20, 22) comporte au moins une ouverture (tubulure 24, 26), apte à être fermée et utilisée pour le remplissage et le vidage.

4. Dispositif selon la revendication 3,
**caractérisé en ce qu'**il est prévu respectivement une ouverture de remplissage et une ouverture de vidage, aptes à être fermées.

5. Dispositif selon au moins l'une des revendications 1 à 4,
**caractérisé en ce que** le carter comporte au moins une entrée (32) pour l'admission d'air comprimé à des fins de nettoyage.

6. Dispositif selon au moins l'une des revendications 1 à 5,
**caractérisé en ce que** le carter comporte au moins une entrée d'eau (34).

7. Dispositif selon la revendication 5 et/ou 6,
**caractérisé en ce que**, par référence à la direction d'écoulement, les entrées débouchent dans le carter (10) en amont ou en aval de l'espace entre les cloisons.

8. Dispositif selon au moins l'une des revendications 1 à 7,
**caractérisé en ce que** le matériau a une surface microporeuse.

9. Dispositif selon au moins l'une des revendications 1 à 8,
**caractérisé en ce que** le matériau est de l'argile expansée.

10. Dispositif selon au moins l'une des revendications 1 à 7,
**caractérisé en ce que** le matériau est formé par des gravillons.

11. Dispositif selon au moins l'une des revendications 1 à 10,
**caractérisé en ce que** le matériau a une granulométrie de 5 à 15 mm environ.
